# EUROPEAN PATENT SPECIFICATION

(11) **EP 4 019 578 B1**
(45) Date of publication and mention of the grant of the patent: **12.02.2025**
(21) Application number: 20217030.4
(22) Date of filing: 23.12.2020
(51) Int. Cl.: C08K 5/00, C08K 5/55, C07F 7/10, C07F 9/6584

(54) **TRI(2-DIMETHYL-R-OXY-SILICONE) BORATE COMPOUND AND SYNTHESIS METHOD THEREOF**
TRI(2-DIMETHYL-R-OXY-SILIKON)-BORATVERBINDUNG UND VERFAHREN ZU IHRER HERSTELLUNG
COMPOSÉ DE BORATE TRI(2-DIMÉTHYL-R-OXY-SILICONE)BORATE ET SON PROCÉDÉ DE SYNTHÈSE

(43) Date of publication of application: 29.06.2022
(73) Proprietor: Gulec ARGE Ltd. Sti., 34320 Istanbul (TR); Gulec Chemicals GmbH, 90429 Nürnberg (DE)
(72) Inventor: Demiryol, Ilker, Istanbul (TR); Gülec, Alper Celal, 90763 Fürth (DE); Akkamis, Yagmur, Istanbul (TR)
(74) Representative: Mutlu, Aydin

(56) References cited:
- CN-A- 104 004 022
- CN-A- 104 650 146
- CN-A- 104 725 426
- DATABASE CA [online] CHEMICAL ABSTRACTS SERVICE, COLUMBUS, OHIO, US; 29 August 2014 (2014-08-29), WANG, YANLIN ET AL: "Double-cage ring flame-retardant charring agent dimethylsilicic acid pentaerythritol phosphate ester (PEPA) compound and its preparation method", XP002803170, retrieved from STN Database accession no. 2014:1435236
- DATABASE CA [online] CHEMICAL ABSTRACTS SERVICE, COLUMBUS, OHIO, US; 27 May 2015 (2015-05-27), WANG, YANLIN ET AL: "Flame retardant 1,3,5-tris(2-((dimethyl(2-(1-sulfido-2,6,7-trioxa-1- phosphabicyclo[2.2.2]octan-4-yl)ethoxy)silyl)oxy)ethyl)isocyanurate compound and its preparation method", XP002803171, retrieved from STN Database accession no. 2015:885804
- DATABASE CA [online] CHEMICAL ABSTRACTS SERVICE, COLUMBUS, OHIO, US; 24 June 2015 (2015-06-24), WANG, YANLIN ET AL: "Tri(2-dimethyl pepa oxysilane trimethylammonium) isocyanurate compound and the preparation method thereof", XP002803172, retrieved from STN Database accession no. 2015:1035790
- MCCUSKER PATRICK A ET AL: "Reactions of Haloboranes with Organocyclosiloxanes. I. Boron Chloride with Methyl and Ethyl Trimer and Tetramer", JOURNAL OF THE AMERICAN CHEMICAL SOCIETY, 5 March 1958 (1958-03-05), pages 1103 - 1106, XP055809973, Retrieved from the Internet <URL:https://pubs.acs.org/doi/pdf/10.1021/ja01538a022> [retrieved on 20210602]
- FRAZER M. J. ET AL: "911. Interaction between Boron Trichloride and Alkoxysilanes", J. CHEM. SOC., 1 January 1960 (1960-01-01), pages 4701 - 4703, XP055810031, Retrieved from the Internet <URL:https://doi.org/10.1039/JR9600004695> [retrieved on 20210602]

## Description

### Technical Field

The present invention relates to tri(2-dimethyl-R-oxy-silicone) borate compound and synthesis method thereof. More particularly, with the present invention, a flame retardant compound which is easy to manufacture, with low cost and suitable for industrial production is presented. Said compound is suitable for use with polymers such as PVC, water-based polyurethane, TPU, rubber, polyester, polypropylene, epoxy, unsaturated polyester and acrylic.

### Background of the Invention

In recent years, synthetic polymer materials have developed rapidly and took its place in almost every sector of the economy and in people's daily life. Since most of the polymer materials are flammable, the development and use of flame retardants to be used with polymer materials is essential. Among such potential flame retardants, multicomponent synergistic halogen-free flame retardants are promising.

Sodium borates (hydrated alkaline borates) are able to release water from their crystalline structure which will help as a fire retardant. In the case of boric acid, a non-alkaline borate will react both as a fire retardant and smoke suppressant. Boric acid releases water as well to help extinguish the fire and also provides char forming effect on the surface of the compound due to the presence of its boron. Borates can also act as an acid catalyst when placed in fire retardant formulations (both liquid and dry) where more acidic fire retardant compounds could be used.

Borates can provide synergistic effect when used with other fire retardant compounds and as a result improve flame retardancy. These compounds include, but are not limited to, aluminum trihydrate, aluminum sulfate, ammonium phosphate, ammonium sulfate, borax/boric acid combined in a species of disodium octaborate tetrahydrate, calcium sulfate (gypsum), guanylurea phosphate, urea, zinc chloride and zinc phosphate.

CN 104725426 A relates to a tri(2-dimethyl-PEPA-oxy-silicon-acyloxy-ethyl) isocyanurate compound and a method of preparation thereof. The preparation method presented in the document comprises the following steps: dissolving tri(2-hydroxyethyl) isocyanurate in an organic solvent, adding dimethyl dihalogenosilane in a three-fold molar fraction of tri(2-hydroxyethyl) isocyanurate. The flame retardant efficiency and coal forming performance of the compound presented in the document is good.

CN 104650146 A relates to dimethyl silicic acid PEPA ester compound which is a flame retardant carbonization agent and a method of preparation thereof. Said compound has a good phosphorussilicon integrated flame retardant and charring activity. It can also be applied to polyolefin, polyvinyl chloride, polyurethane, epoxy resin, unsaturated polyester resin etc.

CN 101961879 A discloses a preparation method for a fiberboard material with flame retardant activity. In this method, PEPA and boric acid/borate are used in certain proportions. The fiber composite flame retardant material cannot be mixed homogeneously and effectively with wood fibers during use, but it has high dispersibility and good suspension stability after adding boric acid or borate.

US 10035033 B2 relates to a compressed fireproof wooden panel based on high frequency technology and production method thereof. The production method comprises the step of adhering a flame retardant film layer to the wooden panel. Additionally, if the flame retardant film layer is boron based, zinc borate, borax and boric acid are used together with PEPA in the preparation phase.

US 2004/039085 A1 relates to new flame retardants. Said flame retardants comprise at least one amine group, a methylol bond, a mineral acid, organic acid and organophosphorous acid, or a mixture thereof. They can be formed with mixtures of very weak mineral acids and organic acids such as boric acid and cyanuric acid. The obtained compositions are suitable for use in flame retardant applications for coatings, adhesives and products consist of polymeric materials.

In the light of the above information, it is clear that the flame retardant agents have a wide range of use. However, no study has been found on the flame retardant agents with a triple structure containing borate/boric acid. Novel compounds with flame retardancy properties would be an improvement in the related technical field. For this purpose, the present invention provides novel tri(2-dimethyl-R-oxy-silicone) borate compounds with flame retardant properties and the synthesis method thereof.

### Summary of the Invention

In an aspect, the present invention provides a compound having the following Formula I. 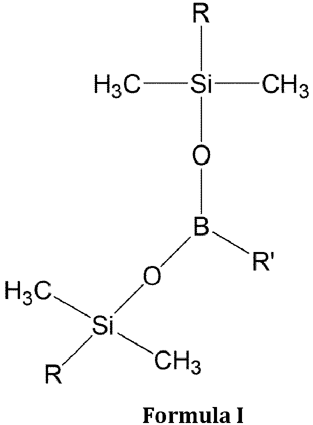 wherein;
R is a residue based on melamine or 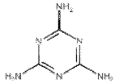 2,6,7-trioxa-1-phosphabicyclo-2.2.2-octane-4-methanol (PEPA) and 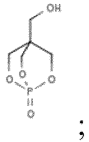
R' is a residue based on 2-dimethyl-melamine-oxy-silicone 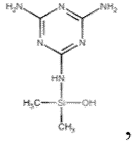
2-dimethyl-PEPA-oxy-silicone
or a hydroxyl group.

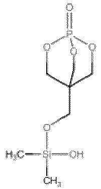

In preferred embodiments of the present invention, the compound is selected from the group comprising the following compunds:

| **Compound** | **R** | **R'** |
|---|---|---|
| 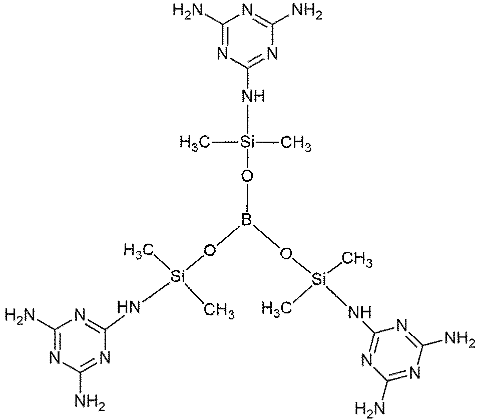 | Melamine | 2-dimethyl-melamine-oxy-silicone |
| 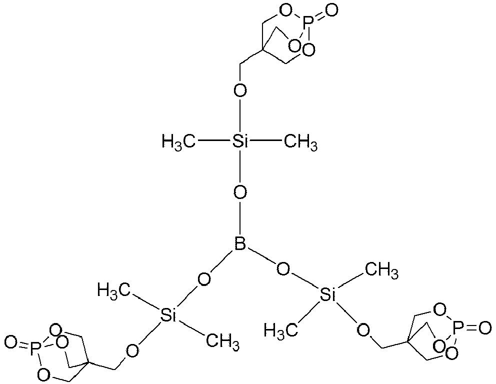 | PEPA | 2-dimethyl-PEPA-oxy-silicone |
| 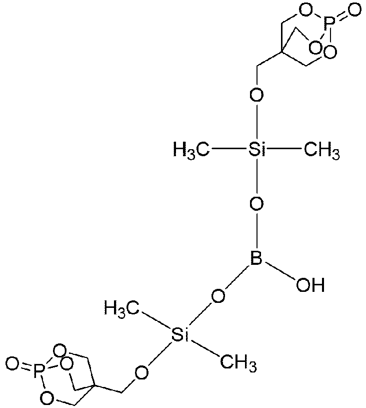 | PEPA | Hydroxyl |
| 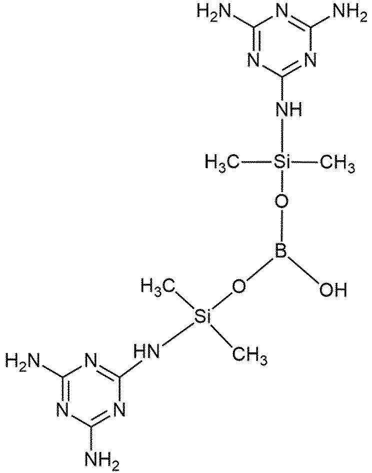 | Melamine | Hydroxyl |

In an aspect, the compound according to the invention is synthesized by a method comprising the following steps:
- preparing a reaction mixture by way of mixing boric acid, an organosilicon compound and an additional reactant selected from PEPA and melamine, along with at least one organic solvent,
- reacting boric acid, an organosilicon compound and said additional reactant, and
- purifying the obtained compound.

In an embodiment, the compound according to the invention is synthesized by a method comprising the following steps:
- dissolving boric acid in an organic solvent,
- adding the organosilicon compound to the reaction mixture,
- adding a further amount of organic solvent, and PEPA or melamine to the reaction mixture, and
- purifying the obtained compound.

The organic solvent used in the synthesis method of the invention is selected from the group comprising DMF, pyridine, triethylamine, acetonitrile and combinations thereof.

The organosilicon compound used in the synthesis method of the present invention is dimethyldichlorosilane.

In another aspect, the present invention provides the use of the compound of the present invention as a flame retardant agent.

The compound according to the present invention can be incorporated into a polymer. Said polymer is selected from the group comprising PVC, water-based polyurethane, TPU, rubber, polyester, polypropylene, epoxy, unsaturated polyester and acrylic.

### Detailed Description of the Invention

In this detailed description, the structure and synthesis method of tri(2-dimethyl-R-oxy-silicone) borate compound of the present invention are described in detail. It has been noted by the inventors that flame retardant agents with a triple structure containing borate/boric acid have not been studied and investigated. It has been determined for the first time by the inventors that tri(2-dimethyl-R-oxy-silicone) borate can be used as a flame retardant agent. This compound is easy to be produced in industrial scale, low cost and suitable for use with polymers such as PVC, water-based polyurethane, TPU, rubber, polyester, polypropylene, epoxy, unsaturated polyester and acrylic.

The present invention, designed on the basis of these findings, relates to tri(2-dimethyl-R-oxy-silicone) borate compound. The chemical structure of the compound is: 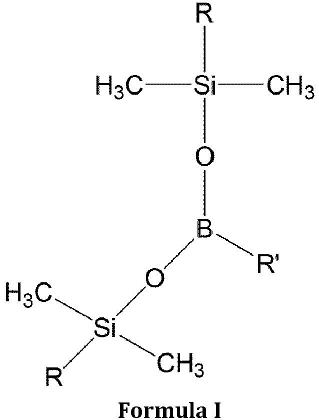 wherein;
R is a residue based on melamine or 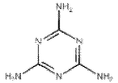
|2,6,7-trioxa-1-phosphabicyclo-2.2.2-octane-4-methanol (PEPA) and 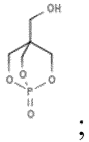
R' is a residue based on 2-dimethyl-melamine-oxy-silicone 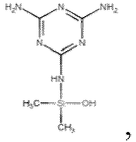
2-dimethyl-PEPA-oxy-silicone
or a hydroxyl group.

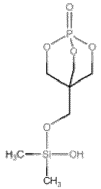

In preferred embodiments, the compound is selected from the group comprising the following compunds:

**Table 1. Exemplary Compounds of the Invention**

| **Compound** | **R** | **R'** |
|---|---|---|
| 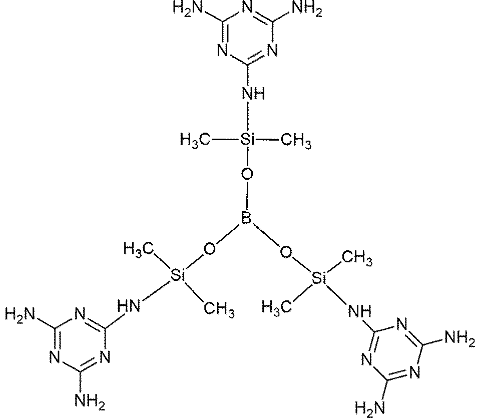 | Melamine | 2-dimethyl-melamine-oxy-silicone |
| 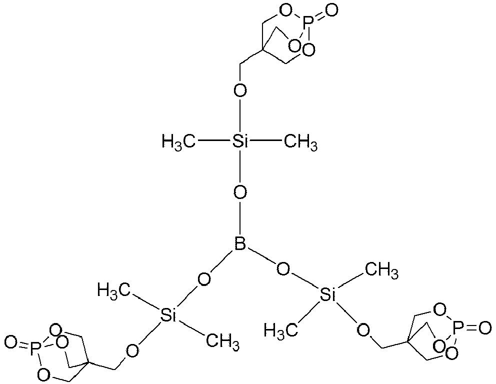 | PEPA | 2-dimethyl-PEPA-oxy-silicone |
| 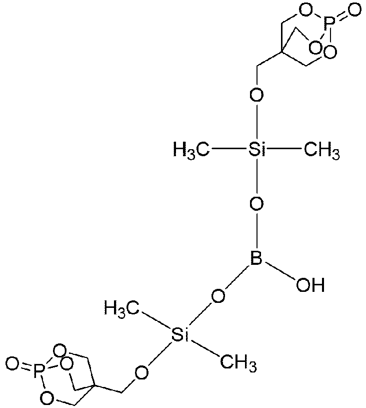 | PEPA | Hydroxyl |
| 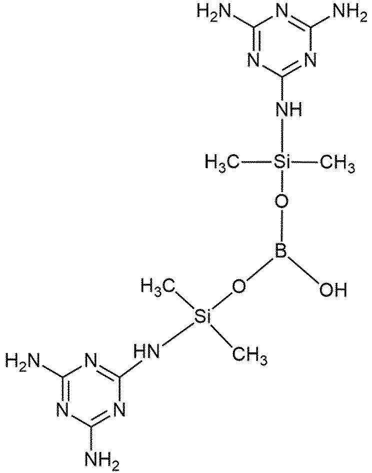 | Melamine | Hydroxyl |

As can be seen, the compound according to the invention comprises silicone and borate/boric acid structures. Silicone structure has good stability and water resistance, and it is easier to form a dense carbon-silicon layer during combustion. Therefore, the flame retardant effect is excellent when silicone is used.

Boric acids/borates have also several advantages such as;
- acting as an acid catalyst,
- acting as an anticorrosive protecting metals in cellulosic materials,
- preventing flame combustion,
- promoting char forming,
- suppressing glowing, smoldering and smoke, and
- having synergistic effect with other fire retardants.

Borates can provide synergistic effect with other fire retardant compounds and therefore would improve flame retardancy. In addition, the use of polymers with the compounds of the invention contributes to this synergistic effect.

The compound according to the present invention have various advantages due to its different components: it acts as a flame retardant by making radicals inactive in the gas phase due to its phosphorus content and acts as a protective barrier by forming a ceramic structure that is resistant to high temperatures during combustion, due to its boron and silicon content. The overall structure hinders the release of combustible gasses by improving the stability of char and protects the material against the attack of oxygen and flame. For this purpose, the present invention provides novel tri(2-dimethyl-R-oxy-silicone) borate compounds with flame retardant properties and the synthesis method thereof.

The compound according to the invention is prepared by a method comprising the following steps:
- preparing a reaction mixture by way of mixing boric acid, an organosilicon compound and an additional reactant selected from PEPA and melamine, along with at least one organic solvent,
- reacting boric acid, an organosilicon compound and said additional reactant, and
- purifying the obtained compound.

More particularly, the compound according to the invention is prepared by a method comprising the following steps:
- dissolving boric acid in an organic solvent,
- adding the organosilicon compound to the reaction mixture,
- adding a further amount of organic solvent, and PEPA or melamine to the reaction mixture, and
- purifying the obtained compound.

The reaction performed for the synthesis of the compound of the invention is schematized below. Herein, R group is representatively PEPA and R' group is representatively 2-dimethyl-PEPA-oxy-silicone.

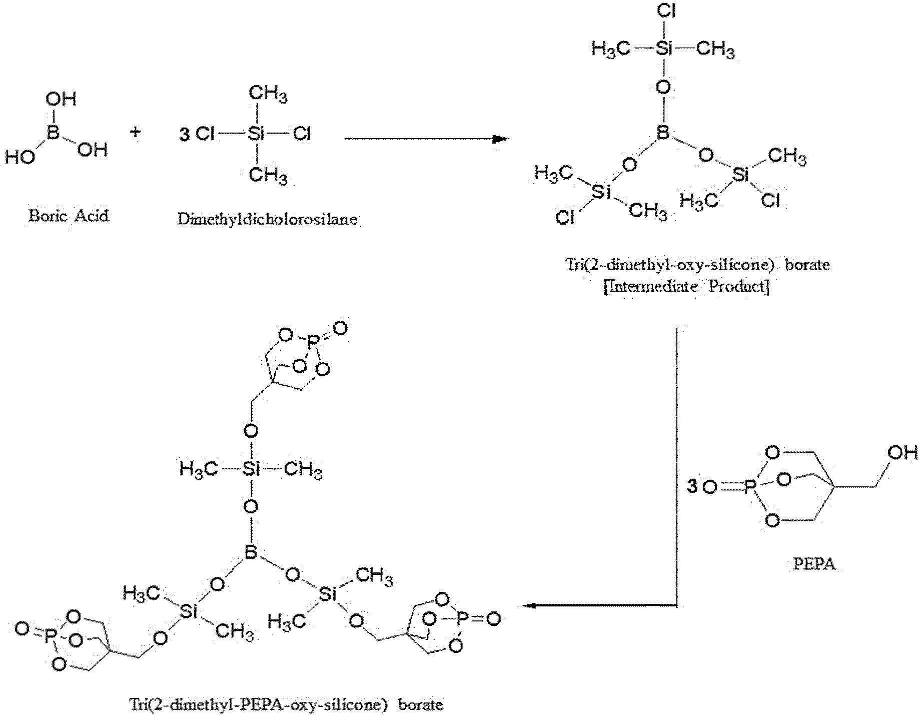

In another schematic representation, R group is selected as melamine and R' group is selected as 2-dimethyl-melamine-oxy-silicone.

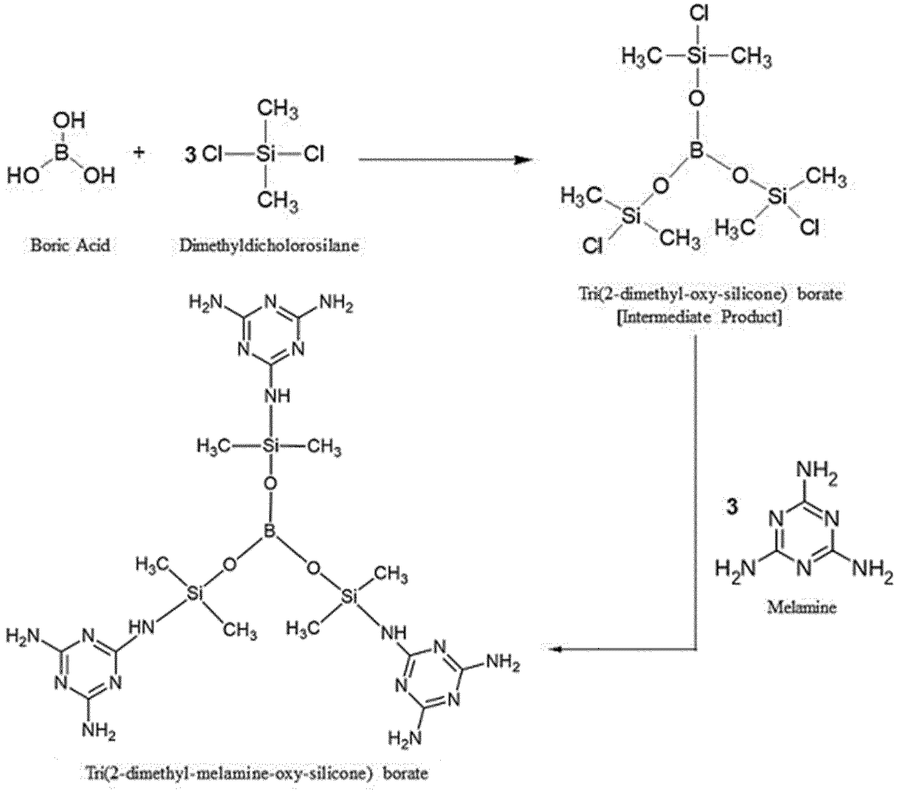

The production process of the tri(2-dimethyl-R-oxy-silicone) borate compound for industrial production is easy and cost-effective, since the reaction steps are easy to perform and the reactants are not costly.

The organic solvent used in the synthesis method of the present invention is selected from the group comprising DMF, pyridine, triethylamine, acetonitrile and combinations thereof.

The organosilicon compound used in the synthesis method of the present invention is dihalogensilane or dimethyldihalogensilane. Said dihalogensilane or dimethyldihalogensilane can be dimethyldichlorosilane, dimethyldifluorosilane, dimethyldibromosilane or diiodosilane. More preferably, the organosilicon compound used is dimethyldichlorosilane.

The procedures and synthesis steps performed to obtain the compound according to the present invention are described in detail in the examples given below.

### EXAMPLES

### Example 1 - Procedure I

A 500 ml four-necked round bottom flask was equipped with a mechanical stirrer, reflux condenser was connected with a calcium chloride tube, thermometer and a pressure funnel. The flask was charged with 80 ml DMF, 15.6 ml (0.1941 mol) pyridine and 4 g (0.0647 mol) boric acid. The reaction mixture was stirred until the boric acid dissolved. 23.6 ml (0.1941 mol) dimethyldichlorosilane was added dropwise into the flask. The reaction mixture was stirred at 50 °C for 7-10 hours. After HCl gas discharged, mixture was cooled to bellow 30 °C. 35 g (0.1941 mol) 2,6,7-Trioxa-1-phosphabicyclo-2.2.2-octane-4-methanol (PEPA), 15.6 ml (0.1941 mol) pyridine and 80 ml DMF was added dropwise into the flask. The reaction mixture was stirred at 60-80 °C for 12-18 hours. Afterwards, the reaction mixture was cooled, added 100 ml chloroform, filtered, and the precipitate was washed with water. The reaction mixture was then dried at 80 °C under reduced pressure. Tri(2-dimethyl-PEPA-oxy-silicone) borate was obtained with yield of 84%.

### Example 2 - Procedure II

A 500 ml four-necked round bottom flask was equipped with a mechanical stirrer, reflux condenser was connected with a calcium chloride tube, thermometer and a pressure funnel. The flask was charged with 80 ml DMF, 27.1 ml (0.1941 mol) triethylamine and 4 g (0.0647 mol) boric acid. The reaction mixture was stirred until the boric acid dissolved. 23.6 ml (0.1941 mol) dimethyldichlorosilane was added dropwise into the flask. The reaction mixture was stirred at 50 °C for 6-8 hours. After HCl gas discharged, mixture was cooled to bellow 30 °C. 35 g (0.1941 mol) PEPA, 27.1 ml (0.1941 mol) triethylamine and 80 ml DMF was added dropwise into the flask. The reaction mixture was stirred at 60-80 °C for 12-16 hours. Afterwards, the reaction mixture was cooled, added 100 ml chloroform, filtered, and the precipitate was washed with water. The reaction mixture was then dried at 80 °C under reduced pressure. Tri(2-dimethyl-PEPA-oxy-silicone) borate was obtained with yield of 89.7%.

### Example 3 - Procedure III

A 500 ml four-necked round bottom flask was equipped with a mechanical stirrer, reflux condenser was connected with a calcium chloride tube, thermometer and a pressure funnel. The flask was charged with 100 ml acetonitrile, 15.6 ml (0.1941 mol) pyridine and 4 g (0.0647 mol) boric acid. The reaction mixture was stirred until the boric acid dissolved. 23.6 ml (0.1941 mol) dimethyldichlorosilane was added dropwise into the flask. The reaction mixture was stirred at 50 °C for 8-12 hours. After HCl gas discharged, mixture was cooled to bellow 30 °C. 35 g (0.1941 mol) 2,6,7-Trioxa-1-phosphabicyclo-2.2.2-octane-4-methanol (PEPA), 15.6 ml (0.1941 mol) pyridine and 90 ml acetonitrile was added dropwise into the flask. The reaction mixture was stirred at 60-80 °C for 16-18 hours. Afterwards, the reaction mixture was cooled, added 100 ml chloroform, filtered, and the precipitate was washed with water. The reaction mixture was then dried at 80 °C under reduced pressure. Tri(2-dimethyl-PEPA-oxy-silicone) borate was obtained with yield of 78%.

### Example 4 - Procedure IV

A 500 ml four-necked round bottom flask was equipped with a mechanical stirrer, reflux condenser was connected with a calcium chloride tube, thermometer and a pressure funnel. The flask was charged with 100 ml acetonitrile, 27.1 ml (0.1941 mol) triethylamine and 4 g (0.0647 mol) boric acid. The reaction mixture was stirred until the boric acid dissolved. 23.6 ml (0.1941 mol) dimethyldichlorosilane was added dropwise into the flask. The reaction mixture was stirred at 50 °C for 6-9 hours. After HCl gas discharged, mixture was cooled to bellow 30 °C. 35 g (0.1941 mol) PEPA, 27.1 ml (0.1941 mol) triethylamine and 80 ml acetonitrile was added dropwise into the flask. The reaction mixture was stirred at 60-80 °C for 12-16 hours. Afterwards, the reaction mixture was cooled, added 100 ml chloroform, filtered, and the precipitate was washed with water. The reaction mixture was then dried at 80 °C under reduced pressure. Tri(2-dimethyl-PEPA-oxy-silicon) borate was obtained with yield of 79.6%.

### Example 5 - Procedure V

A 500 ml four-necked round bottom flask was equipped with a mechanical stirrer, reflux condenser was connected with a calcium chloride tube, thermometer and a pressure funnel. The flask was charged with 90 ml 1,4-dioxane, 15.6 ml (0.1941 mol) pyridine and 4 g (0.0647 mol) boric acid. The reaction mixture was stirred until the boric acid dissolved. 23.6 ml (0.1941 mol) dimethyldichlorosilane was added dropwise into the flask. The reaction mixture was stirred at 50 °C for 7-12 hours. After HCl gas discharged, mixture was cooled to bellow 30 °C. 35 g (0.1941 mol) 2,6,7-Trioxa-1-phosphabicyclo-2.2.2-octane-4-methanol (PEPA), 15.6 ml (0.1941 mol) pyridine and 90 ml 1,4-dioxane was added dropwise into the flask. The reaction mixture was stirred at 60-80 °C for 14-18 hours. Afterwards, the reaction mixture was cooled, added 100 ml chloroform, filtered, and the precipitate was washed with water. The reaction mixture was then dried at 80 °C under reduced pressure. Tri(2-dimethyl-PEPA-oxy-silicone) borate was obtained with yield of 77.5%.

### Example 6 - Procedure VI

A 500 ml four-necked round bottom flask was equipped with a mechanical stirrer, reflux condenser was connected with a calcium chloride tube, thermometer and a pressure funnel. The flask was charged with 90 ml 1,4-dioxane, 27.1 ml (0.1941 mol) triethylamine and 4 g (0.0647 mol) boric acid. The reaction mixture was stirred until the boric acid dissolved. 23.6 ml (0.1941 mol) dimethyldichlorosilane was added dropwise into the flask. The reaction mixture was stirred at 50 °C for 6-14 hours. After HCl gas discharged, mixture was cooled to bellow 30 °C. 35 g (0.1941 mol) PEPA, 27.1 ml (0.1941 mol) triethylamine and 80 ml 1,4-dioxane was added dropwise into the flask. The reaction mixture was stirred at 60-80 °C for 12-16 hours. Afterwards, the reaction mixture was cooled, added 100 ml chloroform, filtered, and the precipitate was washed with water. The reaction mixture was then dried at 80 °C under reduced pressure. Tri(2-dimethyl-PEPA-oxy-silicone) borate was obtained with yield of 81%.

### Example 7 - Procedure VII

A 250 ml four-necked round bottom flask was equipped with a mechanical stirrer, reflux condenser was connected with a calcium chloride tube, thermometer and a pressure funnel. The flask was charged with 30 ml DMF, 7.8 ml (0.097 mol) pyridine and 2 g (0.0323 mol) boric acid. The reaction mixture was stirred until the boric acid dissolved. 11.8 ml (0.097 mol) dimethyldichlorosilane was added dropwise into the flask. The reaction mixture was stirred at 50 °C for 6-10 hours. After HCl gas discharged, mixture was cooled to bellow 30 °C. 12.24 g (0.097 mol) melamine, 7.8 ml (0.097 mol) pyridine and 50 ml DMF was added dropwise into the flask. The reaction mixture was stirred at 60-80 °C for 12-18 hours. Afterwards, the reaction mixture was cooled, added 50 ml chloroform, filtered, and the precipitate was washed with water. The reaction mixture was then dried at 80 °C under reduced pressure. Tri(2-dimethyl-melamine-oxy-silicone) borate was obtained with yield of 85%.

### Example 8 - Procedure VIII

A 250 ml four-necked round bottom flask was equipped with a mechanical stirrer, reflux condenser was connected with a calcium chloride tube, thermometer and a pressure funnel. The flask was charged with 30 ml DMF, 13.5 ml (0.097 mol) triethylamine and 2 g (0.0323 mol) boric acid. The reaction mixture was stirred until the boric acid dissolved. 11.8 ml (0.097 mol) dimethyldichlorosilane was added dropwise into the flask. The reaction mixture was stirred at 50 °C for 6-10 hours. After HCl gas discharged, mixture was cooled to bellow 30 °C. 12.24 g (0.097 mol) melamine, 13.5 ml (0.097 mol) triethylamine and 40 ml DMF was added dropwise into the flask. The reaction mixture was stirred at 60-80 °C for 12-16 hours. Afterwards, the reaction mixture was cooled, added 50 ml chloroform, filtered, and the precipitate was washed with water. The reaction mixture was then dried at 80 °C under reduced pressure. Tri(2-dimethyl-melamine-oxy-silicone) borate was obtained with yield of 87.5%.

The characteristics of above procedures are summarized in Table 2.

**Table 2. Overview of procedures containing PEPA and melamine**

| **Prodecure** | **Reactant** | **Base** | **Solvent** | **Time (h)** | **Yield** (%) |
|---|---|---|---|---|---|
| **Example 1** - **Procedure I** | PEPA | Pyridine | DMF | 12-18 | 84 |
| **Example 2** - **Procedure II** | PEPA | Triethylamine | DMF | 12-16 | 89.7 |
| **Example 3** - **Procedure III** | PEPA | Pyridine | Acetonitrile | 16-18 | 78 |
| **Example 4** - **Procedure IV** | PEPA | Triethylamine | Acetonitrile | 12-16 | 79.6 |
| **Example 5** - **Procedure V** | PEPA | Pyridine | 1,4-Dioxane | 14-18 | 77.5 |
| **Example 6** - **Procedure VI** | PEPA | Triethylamine | 1,4-Dioxane | 12-16 | 81 |
| **Example 7** - **Procedure VII** | Melamine | Pyridine | DMF | 12-18 | 85 |
| **Example 8** - **Procedure VIII** | Melamine | Triethylamine | DMF | 12-16 | 87.5 |

The tri(2-dimethyl-R-oxy-silicone) borate compounds of the invention were obtained at the end of the any of the above reactions. Besides PEPA, R group can also be selected as melamine. Similarly, besides 2-dimethyl-PEPA-oxy-silicone, R' group can also be selected from 2-dimethyl-melamine-oxy-silicone and hydroxyl groups. The compounds of the invention are advantageous in that they allow to effectively obtain a flame retardant agent which is easy to manufacture, low cost, and suitable for industrial production.

The compounds according to the present invention are effective when used as a flame retardant agent. Moreover, the compounds can be incorporated into a polymer. Said polymer can be selected from the group comprising PVC, water-based polyurethane, TPU, rubber, polyester, polypropylene, epoxy, unsaturated polyester and acrylic.

The inventors of the present invention determined the limiting oxygen index of the samples which comprise various polymers along with the compound of the invention, in order to demonstrate the flame retardant properties of the compound of the invention. The detailed description of the experiments performed are provided below.

### Preparations of Sample A and B

Materials given in Table 3 are mixed with Heidolph hei-torque 100 mixer at 1000 rpm. PVC films for testing are prepared by roll coating as 600 gr/m². Coating is cured at 180 °C and 120 seconds in oven.

Samples are tested with EN ISO 4589-2 Limit Oxygen Index. Specimen V dimensions (140 mm x 52 mm) are defined according to reference ISO 4589-2 as a test specimen form. Limiting oxygen index test was performed in accordance with specimen V (140 mm × 52 mm).

**Table 3. The ingredients and test results of A and B samples**

| **Materials** | **Sample A** | **Sample B** |
|---|---|---|
| PVC | 100 phr | 100 phr |
| DOTP | 70 phr | 70 phr |
| CaCO₃ | 40 phr | 0 |
| Tri(2-dimethyl-R-oxy-silicone) borate | 0 | 40 phr |
| Heat Stabilizer | 2 phr | 2 phr |
| **LOI** | **20.4** | **25.4** |
| *phr refers to: Parts per Hundred Rubber, a measure used by rubber chemists to depict what amount of certain ingredients are needed, especially pre-vulcanization.* | | |

As can be seen in Table 3, in the sample B where tri(2-dimethyl-R-oxy-silicone) borate compound of the present invention is combined with PVC, DOTP, CaCO₃ and the heat stabilizer, the LOI value of the sample is greater than the LOI value obtained under conditions where the borate compound is not included (i.e., sample A). This proves that the compound according to the present invention increases non-flammability.

### Preparations of Sample C and D

Materials given in Table 4 are mixed with Heidolph hei-torque 100 mixer at 800 rpm. The samples as a 100 gr/m² coating were applied with doctor blade on polyester fabric (90 gr/m²), dried at 120 °C for 120 seconds in oven.

Samples are tested with EN ISO 4589-2 Limit Oxygen Index. Specimen V dimensions (140 mm × 52 mm) are defined according to reference ISO 4589-2 as a test specimen form. Limiting oxygen index test was performed in accordance with specimen V (140 mm × 52 mm).

**Table 4. The ingredients and test results of C and D samples**

| **Materials** | **Sample C** | **Sample D** |
|---|---|---|
| Water Based Polyurethane | 100 phr | 100 phr |
| Crosslinker | 1.5 phr | 1.5 phr |
| Silicone | 0.5 phr | 0.5 phr |
| Viscosity modifier | 1.5 phr | 1.5 phr |
| Tri(2-dimethyl-R-oxy-silicone) borate | 0 | 30 phr |
| **LOI** | **18.5** | **24** |

As can be seen in Table 4, in the sample D where the tri(2-dimethyl-R-oxy-silicone) borate compound of the present invention is combined with water based polyurethane, crosslinker, silicone and the viscosity modifier, the LOI value of the sample is greater than the LOI value obtained under conditions where the borate compound is not included (sample C). This proves that the compound according to the present invention increases non-flammability.

### Preparations of Sample E, F and G

Polyproylene with a melt flow index (MFI) of 2.3 g/10 min⁻¹ (230 °C/2.16 kg) was used. All flame retarded PP composites were prepared in a Rondol twin screw extruder at a temperature about 180 °C. After mixing, the pellets were hot-pressed at about 180 °C under 10 MPa for 10 minutes into sheets of suitable thickness for analysis. The specimens used for the EN ISO 4589-2 Limit Oxygen Index test were of dimensions of 100×6.5×3 mm.

**Table 5. The ingredients and test results of E, F and G samples**

| **Materials** | **Sample E** | **Sample F** | **Sample G** |
|---|---|---|---|
| Polypropylene | %70 | %70 | %70 |
| Ammonium Polyphosphate | %30 | %25 | %20 |
| Tri(2-dimethyl-R-oxy-silicone) borate | 0 | %5 | %10 |
| **LOI** | **22.5** | **27** | **29.5** |

As can be seen in Table 5, the LOI of the E sample, which does not comprise the tri(2-dimethyl-R-oxy-silicon) borate compound of the present invention is quite low when compared to the sample F and sample G comprising the tri(2-dimethyl-R-oxy-silicon) borate compound. In view of these test results, the percentage of compounds according to the present invention in the sample is also fundamental. It can be seen that increasing the percentage of the compound of the present invention in the sample increases the non-flammability. Therefore, the present invention is highly advantageous in regard it develops non-flammability.

In light of the above data, it is clear that compounds according to the invention are suitable to be incorporated into a polymer such as PVC, water-based polyurethane, TPU, rubber, polyester, polypropylene, epoxy, unsaturated polyester and acrylic. In addition, it is shown by the present invention that the percentage and/or amount of these tri(2-dimethyl-R-oxy-silicone) borate compounds incorporated into a polymer affect the efficiency of flame retardancy. In other terms; as the amount of the compound of the present invention increases in a sample, the LOI value of the sample is improved, proving the flame retardancy effect of the compounds of the present invention.

## Claims

1. A compound having Formula I: 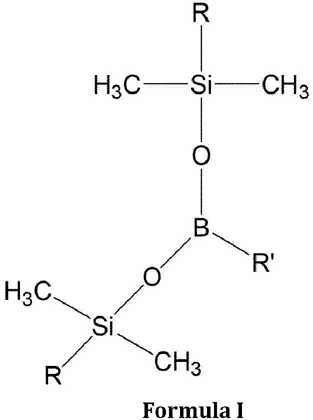 wherein;
R is a residue based on melamine or 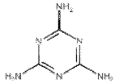
|2,6,7-trioxa-1-phosphabicyclo-2.2.2-octane-4-methanol (PEPA) and 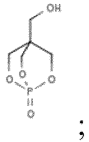
R' is a residue based on 2-dimethyl-melamine-oxy-silicone 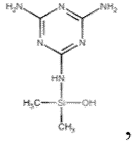
2-dimethyl-PEPA-oxy-silicone
or a hydroxyl group.

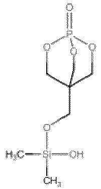

2. A compound according to claim 1, **characterized in that** the compound is selected from the group comprising the following compunds:
| **Compound** | **R** | **R'** |
|---|---|---|
| 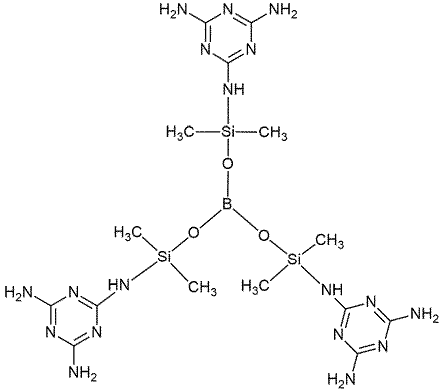 | Melamine | 2-dimethyl-melamine-oxy-silicone |
| | | |
|---|---|---|
| 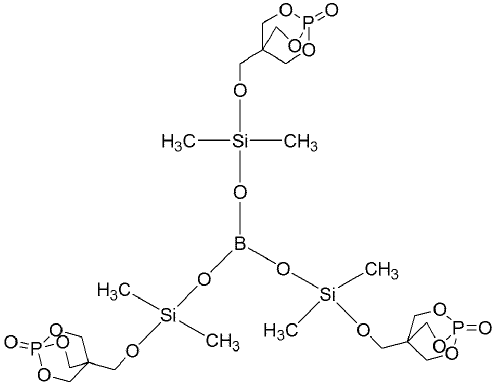 | PEPA | 2-dimethyl-PEPA-oxy-silicone |
| 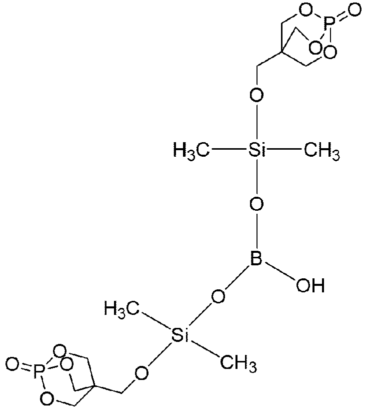 | PEPA | Hydroxyl |
| 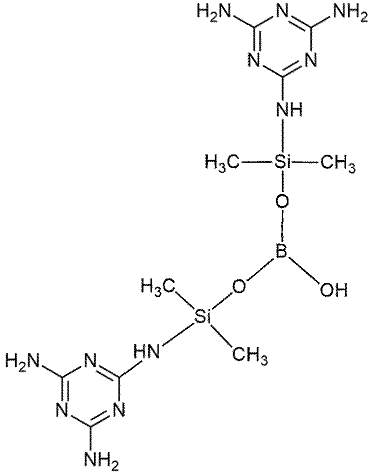 | Melamine | Hydroxyl |

3. A method for synthesizing the compound according to claim 1, **characterized in that** the method comprises the following steps:
- preparing a reaction mixture by way of mixing boric acid, an organosilicon compound and an additional reactant selected from PEPA and melamine, along with at least one organic solvent,
- reacting boric acid, an organosilicon compound and said additional reactant, and
- purifying the obtained compound.

4. A method according to claim 3, wherein the method comprises the steps of:
- dissolving boric acid in an organic solvent,
- adding the organosilicon compound to the reaction mixture,
- adding a further amount of organic solvent, and PEPA or melamine to the reaction mixture, and
- purifying the obtained compound.

5. A method according to claim 3, **characterized in that** the organic solvent is selected from the group comprising DMF, pyridine, triethylamine, acetonitrile and combinations thereof.

6. A method according to claim 3, **characterized in that** the organosilicon compound is dimethyldichlorosilane.

7. Use of the compound according to claim 1 as a flame retardant agent.

8. Use according to claim 7, **characterized in that** the compound is incorporated into a polymer.

9. Use according to claim 8, **characterized in that** the polymer is selected from the group comprising PVC, water-based polyurethane, TPU, rubber, polyester, polypropylene, epoxy, unsaturated polyester and acrylic.

## Patentansprüche

1. Verbindung mit der Formel I: 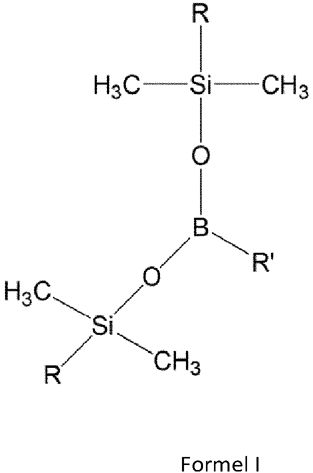 wobei;
R ein Rest basierend auf Melamin 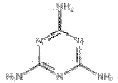 oder
2,6,7-Trioxa-1-phosphabicyclo-2.2.2-octan-4-methanol (PEPA) 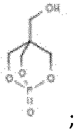 ist, und
R' ein Rest basierend auf 2-Dimethyl-Melamin-Oxysilikon 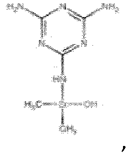
2-Dimethyl-PEPA-Oxysilikon 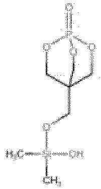
oder eine Hydroxylgruppe ist.

2. Verbindung nach Anspruch 1, **dadurch gekennzeichnet, dass** die Verbindung ausgewählt ist aus der Gruppe, die die folgenden Verbindungen umfasst:
| Verbindung | R | R' |
|---|---|---|
| 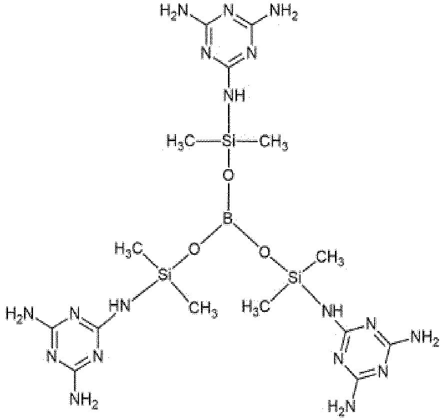 | Melamin | 2-Dimethyl-Melamin-Oxysilikon |
| | | |
|---|---|---|
| 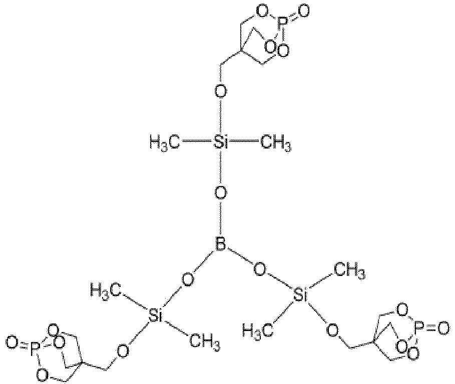 | PEPA | 2-Dimethyl-PEPA-Oxysilikon |
| 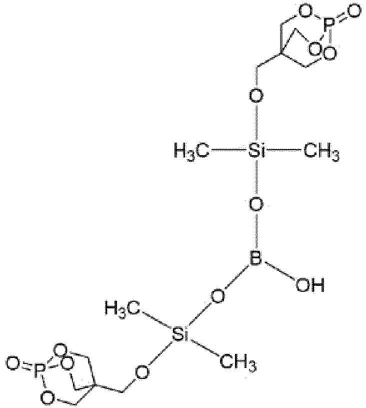 | PEPA | Hydroxyl |
| 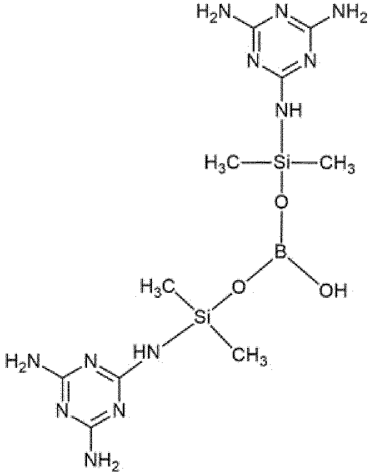 | Melamin | Hydroxyl |

3. Verfahren zur Synthese der Verbindung nach Anspruch 1, **dadurch gekennzeichnet, dass** das Verfahren die folgenden Schritte umfasst:
- Herstellen eines Reaktionsgemischs durch Mischen von Borsäure, einer Organosiliciumverbindung und eines zusätzlichen Reaktanten, ausgewählt aus PEPA und Melamin, zusammen mit mindestens einem organischen Lösungsmittel,
- Umsetzen von Borsäure, einer Organosiliciumverbindung und dem zusätzlichen Reaktanten, und
- Reinigen der erhaltenen Verbindung.

4. Verfahren nach Anspruch 3, wobei das Verfahren die folgenden Schritte umfasst:
- Lösen von Borsäure in einem organischen Lösungsmittel,
- Zugabe der Organosiliciumverbindung zum Reaktionsgemisch,
- Zugabe einer weiteren Menge eines organischen Lösungsmittels und von PEPA oder Melamin zu dem Reaktionsgemisch, und
- Reinigen der erhaltenen Verbindung.

5. Verfahren nach Anspruch 3, **dadurch gekennzeichnet, dass** das organische Lösungsmittel ausgewählt ist aus der Gruppe bestehend aus DMF, Pyridin, Triethylamin, Acetonitril und Kombinationen hiervon.

6. Verfahren nach Anspruch 3, **dadurch gekennzeichnet, dass** die Organosiliciumverbindung Dimethyldichlorsilan ist.

7. Verwendung der Verbindung nach Anspruch 1 als flammhemmendes Mittel.

8. Verwendung nach Anspruch 7, **dadurch gekennzeichnet, dass** die Verbindung in ein Polymer eingearbeitet ist.

9. Verwendung nach Anspruch 8, **dadurch gekennzeichnet, dass** das Polymer ausgewählt ist aus der Gruppe bestehend aus PVC, Polyurethan auf Wasserbasis, TPU, Kautschuk, Polyester, Polypropylen, Epoxid, ungesättigtem Polyester.

## Revendications

1. Composé de formule I : 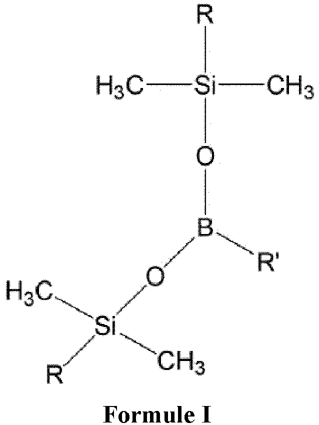 dans laquelle :
R est un résidu de mélamine ou 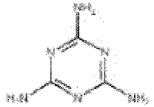
de 2,6,7-trioxa-1-phosphabicyclo-2.2.2-octane-4-méthanol (PEPA) et 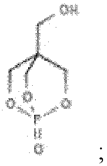
R' est un résidu de 2-diméthyl-mélamine-oxy-silicone 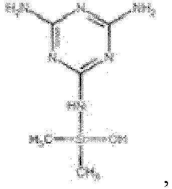
de 2-diméthyl-PEPA-oxy-silicone ou un groupe hydroxy.

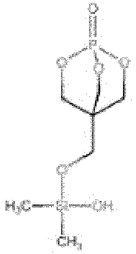

2. Composé selon la revendication 1, **caractérisé en ce que** le composé est choisi dans l'ensemble comprenant les composés suivants :
| **Composé** | **R** | **R'** |
|---|---|---|
| 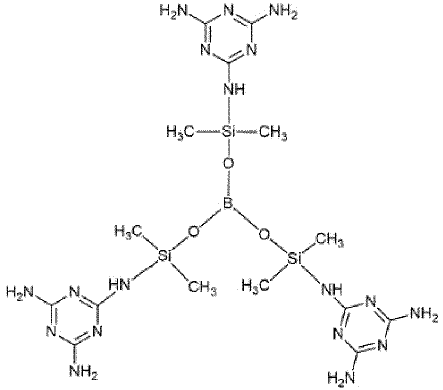 | mélamine | 2-diméthyl-mélamine-oxy-silicone |
| 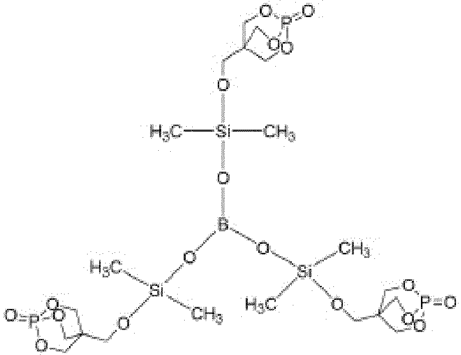 | PEPA | 2-diméthyl-PEPA-oxy-silicone |
| 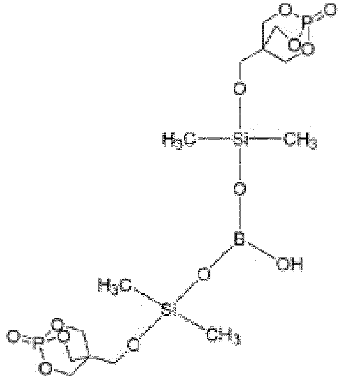 | PEPA | hydroxy |
| 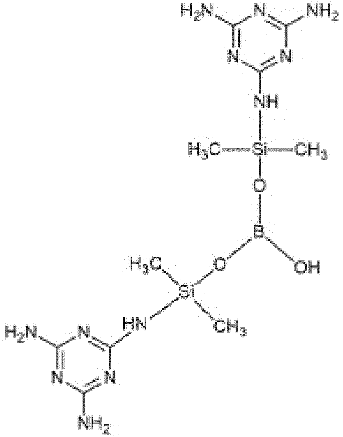 | mélamine | hydroxy |

3. Procédé de synthèse du composé selon la revendication 1, **caractérisé en ce que** le procédé comprend les étapes suivantes consistant à :
- préparer un mélange réactionnel en mélangeant de l'acide borique, un composé organosilicié et un partenaire réactionnel supplémentaire choisi parmi le PEPA et la mélamine, conjointement avec au moins un solvant organique,
- faire réagir l'acide borique, un composé organosilicié et ledit partenaire réactionnel supplémentaire, et
- purifier le composé obtenu.

4. Procédé selon la revendication 3, le procédé comprenant les étapes consistant à :
- dissoudre de l'acide borique dans un solvant organique,
- ajouter le composé organosilicié au mélange réactionnel,
- ajouter une quantité supplémentaire de solvant organique et du PEPA ou de la mélamine au mélange réactionnel, et
- purifier le composé obtenu.

5. Procédé selon la revendication 3, **caractérisé en ce que** le solvant organique est choisi dans l'ensemble comprenant le DMF, la pyridine, la triéthylamine, l'acétonitrile et des associations de tels solvants.

6. Procédé selon la revendication 3, **caractérisé en ce que** le composé organosilicié est le diméthyldichlorosilane.

7. Utilisation du composé selon la revendication 1 en tant qu'agent retardateur de flamme.

8. Utilisation selon la revendication 7, **caractérisée en ce que** le composé est incorporé dans un polymère.

9. Utilisation selon la revendication 8, **caractérisée en ce que** le polymère est choisi dans l'ensemble comprenant le PVC, le polyuréthane à base aqueuse, un TPU, caoutchouc, polyester, polypropylène, polymère époxy, polyester insaturé et un polymère acrylique.
